# EUROPÄISCHE PATENTSCHRIFT

(11) **EP 0 434 658 B1**
(45) Veröffentlichungstag und Bekanntmachung des Hinweises auf die Patenterteilung: **14.09.1994**
(21) Anmeldenummer: 90890315.6
(22) Anmeldetag: 07.12.1990
(51) Int. Cl.: F16K 25/00, C04B 35/10

(54) **Drehschieberventil**
Sliding valve
Vanne rotative

(30) Priorität: 21.12.1989 AT 2909/89
(43) Veröffentlichungstag der Anmeldung: 26.06.1991
(73) Patentinhaber: Fodor, Geza, Dipl.-Ing., W-8000 München 40 (DE)
(72) Erfinder: Fodor, Geza, Dipl.-Ing. (FH), W-8000 München 40 (DE)
(74) Vertreter: Schwabe - Sandmair - Marx

(56) Entgegenhaltungen:
- WO-A-85/04460
- DE-U- 8 715 044
- FR-A- 2 445 305
- GB-A- 1 154 796

## Beschreibung

Die Erfindung bezieht sich auf ein Drehschieberventil für gasförmige oder flüssige Medien entsprechend den im Oberbegriff des Anspruchs definierten Merkmalen. Ein derartiges Ventil ist aus der GB-A-1 154 796 bekannt.

Weitere bekannte Drehschieberventile, die für gasförmige oder flüssige Medien geeignet sind, haben Stahlscheiben, die im üblichen Pneumatik- oder Hydraulikbereich eine Verwendung des Drehschieberventils zulassen. Die Stahlscheiben sind aber sehr verschleißanfällig, so daß die damit versehenen Drehschieberventile eine relativ große Leckage aufweisen, und sie sind in der Herstellung aufwendig. Die Stahlscheiben sind außerdem für aggressive Gase und Flüssigkeiten nicht geeignet.

Aus der DE-PS 31 16 801 ist eine Ventilscheibe, insbesondere für Wasserarmaturen bekannt, die vollständig aus einem Siliciumcarbid besteht, welches maximal 0,1 Vol.-% an geschlossenen Poren aufweist und aus einer Mischung von 70 bis 92 Gew.-% Siliciumcarbid und 8 bis 30 Gew.-% Silicium besteht. Diese Ventilscheiben, die gleichfalls für die Verwendung in einem Schieberventil gedacht sind, sollen einfach herstellbar, genau bearbeitbar und im Betrieb weitgehend störungsunanfällig sein. Dies trifft jedoch nur bei Verwendung dieser Scheiben in Wasserarmaturen zu.

Aus der GB-A-1,154,796 ist ein Ventilsitz-Bauteil bestehend aus 95 - 100 Gew.-% Al₂0₃, 0 - 3 Gew.-% Talg und 0 - 3 Gew.-% Kaolin bekannt. Diesem Dokument ist zu entnehmen, daß zur Herstellung des dort beschriebenen Bauteils Talk und Kaolin jeweils mit einem Anteil von ca. 2 % benötigt werden.

Es wird vorgeschlagen, eine Mischung aus Aluminiumoxid, Talk und Kaolin herzustellen, diese Mischung in einer Mühle zu mahlen und so eine angemessene Homogenität zu gewährleisten.

Der Erfindung liegt die Aufgabe zugrunde, die bisher bekannten Schieberventile mit Scheiben aus keramischem Material weiter zu verbessern, so daß sie sich auch für die Steuerung von gasförmigen oder aggressiven flüssigen Medien eignen, trotzdem einfach hergestellt werden können, verschleißfest sind und eine hohe Dichtheit gewährleisten.

Mit der Erfindung wird diese Aufgabe durch ein Drehschieberventil, wie es im Patentanspruch niedergelegt ist, gelöst. Durch die beschriebene Auswahl des keramischen Materials für die Scheiben wird in Verbindung mit einer sorgfältigen Bearbeitung, insbesondere der aufeinander abdichtend geführten Flächen, die Erfindungsaufgabe in vorteilhafter Weise gelöst. Außer der praktisch vollständigen Verschleißfreiheit und der hohen Dichtheit auch bei gasförmigen Medien zeichnet sich das erfindungsgemäße Drehschieberventil insbesondere dadurch aus, daß es für alle flüssigen und gasförmigen Fluide geeignet ist, einschließlich aggressiver Medien wie Kerosin, Säuren usw. Außerdem weist das Drehschieberventil eine hohe Lebensdauer auf und kann für alle Anwendungsfälle wirtschaftlich gefertigt werden.

Mit Scheiben der im Anspruch vorgeschlagenen Oberflächenqualität, die auch mit einer Schmierung versehen sein können, wird erreicht, daß einerseits die Adhäsionskräfte nicht zu groß sind, anderseits aber die Dichtheit des Drehschieberventils gewährleistet ist.

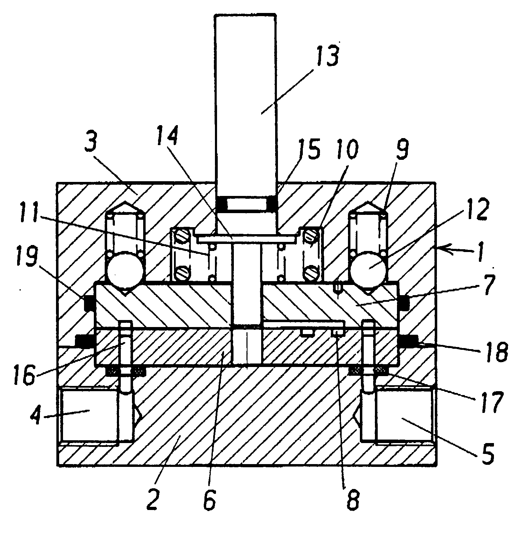

Weitere Einzelheiten und Vorteile der Erfindung ergeben sich aus der nachfolgenden Beschreibung eines Ausführungsbeispiels, das in der Zeichnung dargestellt ist. Diese zeigt einen axialen Mittelschnitt durch ein erfindungsgemäßes Drehschieberventil.

Das dargestellte Drehschieberventil besteht aus einem geteilten Gehäuse 1 mit einem Sockel 2 und einem Deckel 3. Im Sockel 2 sind Anschlüsse 4 und 5 für die Zuführung und die Abführung des gesteuerten Mediums vorgesehen. In einander zugekehrte Ausnehmungen des Sockel 2 und des Deckels 3 sind Scheiben 6 und 7 eingelegt, die aus keramischem Material bestehen, Steuerkanäle 8 aufweisen und durch Druckfedern aneinandergepreßt sind. Die Druckfedern liegen in Ausnehmungen des Deckels 3 und drücken auf die Oberseite der Scheibe 7.

Im Ausführungsbeispiel sind auf konzentrischen Kreisen angeordnete Druckfedern 9, 10 und 11 vorgesehen. Die Druckfedern 9 stützen sich auf der Scheibe 7 über Kugeln 12 ab, die in Aussparungen einrasten können und so bestimmte Stellungen der Scheibe 7 markieren. Diese ist mit Hilfe einer in der Gehäuseachse angeordneten Welle 13 relativ zur Scheibe 6 verdrehbar. Die innerste Druckfeder 11 wirkt über eine Haltescheibe 14 auch auf einen Bund der Welle 13. Diese ist mit einem O-Ring 15 gegen das Gehäuse 1 abgedichtet. Die untere Scheibe 6 aus keramischem Material ist im Sockel 2 durch Paßstifte 16 gegen Verdrehen gesichert, die durch O-Ringe 17 abgedichtet sind, und die beiden Scheiben 6,7 sind durch weitere O-Ringe 18 und 19 gegen das Gehäuse abgedichtet. Statt durch Druckfedern können die beiden Scheiben 6,7 auch durch den Betriebsdruck des gesteuerten Mediums gegeneinander gepreßt werden. Die aufeinander gleitenden Flächen der Scheiben 6,7 können mit einem Schmiermittel versehen sein.

Bei einem Ausführungsbeispiel, das sich als vorteilhaft erwiesen hat, bestehen die beiden Scheiben 6,7 aus einem Material mit folgenden Eigenschaften:
Aluminiumoxid .... 99,7%
Rohdichte > 3,85 g/cm³
Porosität ........ 0%
Druckfestigkeit 2100 N/mm²
Vickershärte 1800-2300 HV 100
Durch die Auswahl und Verwendung eines Keramikmaterials mit diesen Eigenschaften, durch die Optimierung der Oberflächenqualität und durch die allfällige Verwendung einer geeigneten Schmierung wird ein Drehschieberventil erhalten, das nicht nur im üblichen Pneumatik- oder Hydraulikbereich betrieben oder im Sanitärbereich als Wasserarmatur verwendet werden kann, sondern praktisch für die Steuerung aller gasförmigen oder flüssigen Medien geeignet ist, einschließlich aggressiver Gase und Medien wie insbesondere Kerosin und Säuren. Trotzdem sind die aufeinander gleitenden Scheiben wirtschaftlich herstellbar, besonders verschleißfest und langlebig. Sie zeichnen sich außerdem durch große Dichtheit aus.

## Patentansprüche

1. Drehschieberventil für gasförmige oder flüssige Medien, mit einem geteilten Gehäuse (1), das Anschlüsse für die Zuführung und für die Abführung eines gesteuerten Mediums aufweist und in dem zwei Scheiben (6, 7) aus keramischem Material übereinander angeordnet sind, die mit Steuerkanälen (8) versehen und relativ zueinander verdrehbar sind, wobei die Scheiben (6, 7) aus Aluminiumoxidkeramik mit einem Anteil von mindestens 96 Gew.-% Aluminiumoxid und einer Porosität von wenigstens annähernd 0 % bestehen, **dadurch gekennzeichnet**, daß die Scheiben (6, 7) im wesentlichen aus Aluminiumoxid mit einer Rohdichte größer als 3,75 g/cm³, einer Druckfestigkeit zwischen 1800 und 4000 N/mm², vorzugsweise wenigstens annähernd 2100 N/mm², und einer Vickershärte von 1800-2300 HV 100 bestehen, und daß die Oberflächenrauhigkeit der Scheiben (6, 7), wenigstens im Bereich der aufeinanderliegenden Flächen, Ra < 0,1 ist, bei einem Traganteil tp₁ > 90%.

## Claims

1. A rotary sliding valve for gaseous or liquid media comprising a split housing (1) having terminals for the input and the output of a controlled medium, and in which two disks (6, 7) of ceramic material are disposed one above the other, which are provided with control channels (8) and which are rotatable with respect to one another, said disks (6, 7) consisting of aluminium oxide ceramic having a content of at least 96 % by weight of aluminium oxide and a porosity of at least approximately 0 %, characterised in that said disks (6, 7) consist substantially of aluminium oxide with a raw density of more than 3.75 g/cm³, a compression strength between 1800 and 4000 N/mm², preferably at least approximately 2100 N/mm², and a Vickers hardness of 1800-2300 HV 100, and that the surface roughness of the disks (6, 7) at least in the area of the faces touching one another, is Ra < 0.1 at a support portion tp1 > 90%.

## Revendications

1. Vanne rotative pour fluides gazeux ou liquides, comportant un corps divisé (1) qui présente des connexions pour l'amenée et l'évacuation d'un fluide commandé et dans lequel sont disposés l'un au-dessus de l'autre deux disques (6, 7) en un matériau céramique qui sont pourvus de canaux de commande (8) et qui peuvent être déplacés en rotation l'un par rapport à l'autre, les disques (6, 7) étant en céramique à base d'oxyde d'aluminium avec une proportion d'au moins 96 % en poids d'oxyde d'aluminium et une porosité d'au moins environ 0 %, caractérisée en ce que les disques (6, 7) sont réalisés essentiellement en oxyde d'aluminium avec une masse volumique apparente supérieure à 3,75 g/cm³, une résistance à la compression comprise entre 1800 et 4000 N/mm², de préférence d'au moins environ 2100 N/mm², et une dureté Vickers de 1800 à 2300 HV 100, et que la rugosité de surface des disques (6 7), au moins à l'endroit des faces superposées, est de Ra < 0,1 pour une partie portante tp₁ > 90 %.
